Europäisches Patentamt

European Patent Office

Office européen des brevets

(11) Veröffentlichungsnummer: **0 414 121 A2**

(19)

(12) **EUROPÄISCHE PATENTANMELDUNG**

(21) Anmeldenummer: 90115661.2

(22) Anmeldetag: 16.08.90

(51) Int. Cl.⁵: **H04B 1/16, B60R 11/02**

(30) Priorität: **24.08.89 DE 3927993**

(43) Veröffentlichungstag der Anmeldung:
**27.02.91 Patentblatt 91/09**

(84) Benannte Vertragsstaaten:
**DE FR GB IT**

(71) Anmelder: **Blaupunkt-Werke GmbH**
**Robert-Bosch-Strasse 200**
**D-3200 Hildesheim(DE)**

(72) Erfinder: **Baum, Wolfgang**
**Albertus-Magnus-Strasse 52**
**D-3200 Hildesheim(DE)**

Erfinder: **Liman, Helmut**
**Meerbrink 19**
**D-3204 Nordstemmen(DE)**
Erfinder: **Lauke, Volker**
**Küchenthalstrasse 41**
**D-3200 Hildesheim(DE)**
Erfinder: **Catanescu, Ralf**
**Silberfinder Strasse 18**
**D-3200 Hildesheim(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Autoradio.**

㉗ Es wird ein Autoradio mit einem neuen Bedienkonzept beschrieben, bei dem sich in Abhängigkeit
von der Eingabe eines bestimmten Codes unterschiedliche Sender unter ein und derselben Stationstaste speichern lassen, wobei die Codeeingabe über
eine Schlüsselkarte erfolgt, die mit unterteilten Widerstandsbahnen bedruckt ist und deren Unterteilung
von einem vorgegebenen Code bestimmt wird.

FIG.1

Xerox Copy Centre

# AUTORADIO

Gegenstand des Schutzrechts ist ein neues Autoradio mit Speichern für die Werte der Einstellvariablen, mit den Speichern vorgeschalteten Schreib-/Lesestufen und einem die Speicher verwaltenden Mikroprozessor.

Moderne Bedienungskonzepte für Autoradios und für überhaupt alle Geräte, bei deren Bedienung Einstellungen bestimmter Werte wählbar sind, nutzen für die Speicherung der gewählten Einstellungen elektronischer Speicher und zu deren Verwaltung Mikroprozessoren, in denen vorgegebene Programme ablaufen, wenn ein gespeicherter Wert wirksam werden oder geändert werden soll.

Im Unterschied zu manchen anderen Geräten wird jedoch ein Autoradio nicht ständig von derselben Person bedient. Viele Autos werden von allen Familienmitgliedern gefahren und die einzelnen haben oft unterschiedliche Hörgewohnheiten, z. B. Vorlieben für jeweils andere Rundfunkprogramme. Autoradios verfügen aber nur über eine begrenzte Anzahl von Einstellorganen. Deren Einstellung wird daher oft geändert, wenn ein Fahrer mit anderen Hörgewohnheiten sich an das Lenkrad setzt. Dies verursacht nicht selten Ärger bei dem Fahrzeugeigentümer, der erwartet, die von ihm gewählten Einstellungen vorzufinden.

Der Erfindung lag daher die Aufgabe zugrunde, Autoradios so auszustatten, daß solch ein Ärger nicht entstehen kann.

Diese Aufgabe wird z. B. durch ein Autoradio mit den Merkmalen des Anspruchs 1 gelöst.

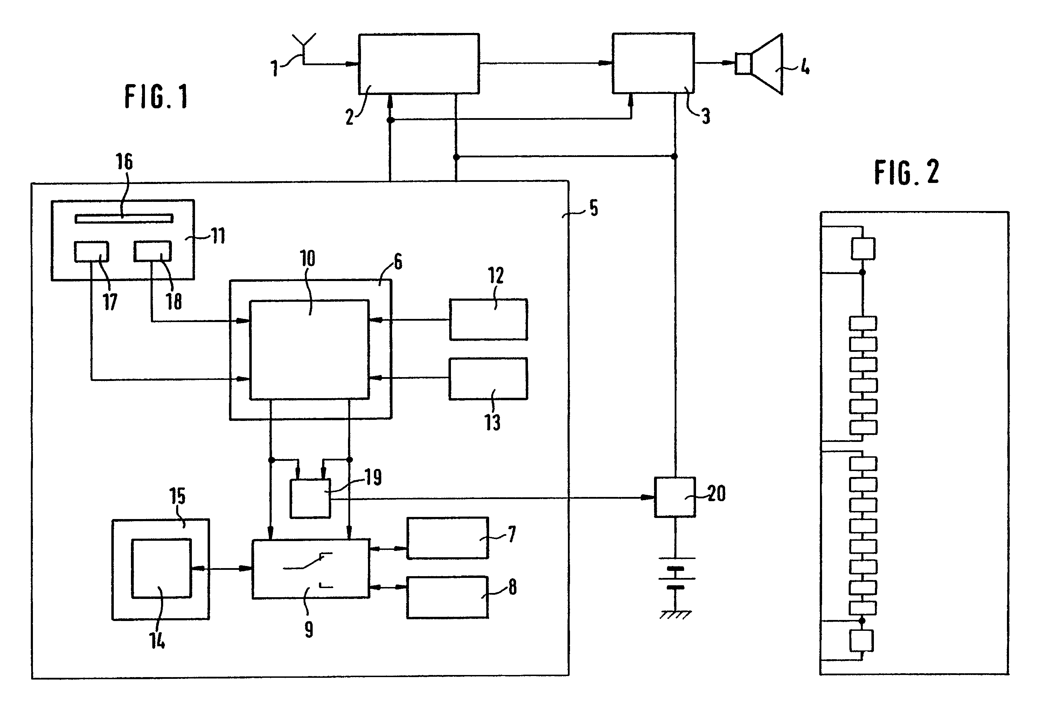

Ein Ausführungsbeispiel der Erfindung wird anhand eines in Figur 1 dargestellten Blockschaltbildes näher erläutert.

Jedes Autoradio ist an eine Autoantenne 1 angeschlossen und besteht aus einem Tuner 2 und einem NF-Verstärker 3, an den ein oder mehrere Lautsprecher 4 angeschlossen sind.

Die Abstimmung des Tuners 2 auf den gewünschten Sender und die gewünschte Lautstärke für die empfangene Sendung werden am Bedienteil 5 des Autoradios eingestellt. Dieses Bedienteil ist in aller Regel in die Blende des Autoradios integriert. Das Bedienteil enthält eine Anzahl von Einstellorganen, wie Lautstärkeregler, Abstimmknopf, Stationstaste, Verkehrsfunk-Wahlschalter und dergleichen mehr.

In dem Autoradio, das dem Ausführungsbeispiel der Erfindung zugrundeliegt, werden die Einstellung der Einstellorgane über Schreib-/Lesestufen in elektronischen Speichern abgelegt, die von einem Mikroprozessor verwaltet werden. Dies läßt sich besonders deutlich an einer Stationstaste erläutern. Die Stationstaste vereinigt in sich zwei Funktionen; mit einer Stationstaste soll erwartungsgemäß ein bestimmter Sender eingestellt werden können, andererseits muß eben dieser bestimmte Sender zunächst der Stationstaste zugeordnet werden können. Bei einem bevorzugten Bedienkonzept wird dazu durch eine kurzzeitige Betätigung der Stationstaste der Aufruf des gespeicherten Senders und durch eine längere Betätigung die Ablage eines mit dem Abstimmknopf eingestellten Rundfunksenders in dem Speicher der Stationstaste bewirkt.

Die der Erfindung zugrundeliegende Aufgabe ergibt sich, wenn der Autofahrer in dem Speicher der Stationstasten nicht die von ihm erwarteten Sender findet, weil die Stationstasten von dem Vorfahrer mit anderen Rundfunksendern belegt wurden. Zur Lösung der Aufgabe weist in dem dargestellten Ausführungsbeispiel der Erfindung jede Stationstaste einen zweiten oder ggf. weitere Speicher auf, die wahlweise über einen Umschalter 9 einschaltbar sind.

Die Stellung des Umschalters 9 wird durch eine Vergleichsstufe 10 bestimmt, die Bestandteil des Mikroprozessors 6 ist. Die Vergleichsstufe 10 ist dazu an einer Eingabeeinheit 11 angeschlossen, in die der Fahrer einen ihm bekannten Code eingeben muß.

Die Eingabe eines Codes zum Schutz des Autoradios vor einem Diebstahl ist inzwischen bei vielen Autoradios bekannt. Solange bei einem solchen "codegeschützten" Autoradio der Code nicht eingegeben ist, bleibt in der Code-Schutzschaltung 20 ein Schalter in der Anschlußleitung des Autoradios an die Autobatterie unterbrochen.

Bei dem Ausführungsbeispiel der Erfindung verfügt die Vergleichsstufe im Mikroprozessor 6 über zwei Speicher 12 und 13, in denen zwei verschiedene zulässige Codes abgelegt sind. Es können natürlich auch mehr als zwei Speicher vorgesehen sein.

Jedem zulässigen Code ist eine bestimmte Stellung des Umschalters 9 zugeordnet. Wird gemäß dem Ausführungsbeispiel der erste zulässige Code in die Eingabeeinheit 11 eingegeben, dann wird in der Vergleichsstufe der eingegebene Code mit dem Inhalt der beiden Speicher 12 und 13 verglichen. Da der in dem Speicher 12 enthaltene Code mit dem eingegebenen Code übereinstimmt, wird der erste Ausgang der Vergleichsstufe belegt. Dessen Ausgangssignal schaltet dann den Umschalter 9 in die erste Stellung.

Der Nutzsignal-Eingang des Umschalters 9 ist mit der Schreib-/Lesestufe 14 für den Speicher 7 und 8 der Stationstaste 15 verbunden, die im übrigen in der bereits angedeuteten, bekannten Weise aufgebaut ist und daher nicht näher beschrieben zu werden braucht.

Über die Schreib-/Lesestufe 14 kann nun der berechtigte Autofahrer die von ihm bevorzugten Rundfunksender in den ersten Speicher 7 ablegen und aus diesem Speicher wieder abrufen.

Wird im Ausführungsbeispiel der zweite zulässige Code in die Eingabeeinheit eingegeben, dann wird der zweite Ausgang der Vergleichsstufe 10 belegt.

Die Belegung von zwei verschiedenen Ausgängen der Vergleichsstufe 10 kann auch dargestellt werden durch unterschiedliche Ausgangssignale an ein und demselben Ausgang der Vergleichsstufe. Dann ist im Eingang des Umschalters 9 jedoch noch eine Unterscheidungsschaltung für die beiden hier als unterschiedliche Eingangssignale eintreffenden Ausgangssignale der Vergleichsstufe vorzusehen.

Ist der zweite Ausgang der Vergleichsstufe belegt, dann wird der Umschalter 9 in die zweite Stellung gelegt. Über die Schreib-/Leseschaltung 14 kann nun der zweite berechtigte Fahrzeugbenutzer die von ihm bevorzugten Rundfunksender in dem zweiten Speicher 8 ablegen und wieder aufrufen.

Die hier vorgestellte Schaltung kann auch von ein und demselben Autofahrer dazu benutzt werden, um in dem ersten Speicher 7 die im näheren Umkreis seines Wohnortes empfangbaren Lieblingssender zu speichern und im zweiten Speicher 8 die bei Fernfahrten weitab vom Wohnort empfangbaren Verkehrsfunksender abzulegen.

Für die Eingabe der verschiedenen Codes eignet sich insbesondere eine Schlüsselkarte, die, wie Fig. 2 zeigt, mit einer Widerstandsbahn bedruckt ist, an deren Abgriffen ein bestimmter von Schlüsselkarte zu Schlüsselkarte verschiedener Widerstandswert abnehmbar ist. Im Ausführungsbeispiel sind zwei Widerstandsbahnen auf der Schlüsselkarte vorgesehen, die jeweils maximal acht hintereinander geschaltete, gleich große Teilwiderstände aufweisen, so daß jede einen eigenen Widerstandswert darstellt.

In der Eingabeeinheit findet sich eine Kartenaufnahme 16, die den jeweiligen Wert der einzelnen Widerstände über A/D-Wandler 17/18 für die Verarbeitung in der Vergleichsstufe 10 durch das Mikroprozessorprogramm bereitstellt.

Da in einem Kraftfahrzeug die Handhabung der Schlüsselkarte so einfach wie möglich gestaltet sein soll, muß die Schlüsselkarte lesbar sein, gleichgültig welche Seite nach oben weist. Dazu sind rechts und links von den zwei Widerständen zwei weitere Widerstände aufgedruckt, von denen der eine, z. B. der linke, stets einen höhren Wert hat als der andere. Dadurch ist gewährleistet, daß die an dem A/D-Wandler abnehmbaren Daten keine Fehlschaltungen hervorrufen. Der Wert dieser Außenwiderstände wird in der Kartenaufnahme abgetastet und ausgewertet.

Die mit der Schlüsselkarte in den Mikroprozessor eingeführten Daten können gemäß einer Weiterentwicklung der Erfindung auch in der bekannten Weise zur Entriegelung einer Diebstahlschutzschaltung dienen. Der Steuereingang des zugehörigen Schalters 20 ist dazu über eine Oderstufe 19 mit beiden Ausgängen der Vergleichsstufe 10 verbunden.

Die Verwendung von Schlüsselkarten ist für die Erfindung nicht zwingend. Ein Code kann auch dadurch in den Mikroprozessor eingegeben werden, daß eine Schlüsseltaste zur Auswahl unter den Speichern 7 oder 8, d. h. zur Betätigung des Umschalters 10 in einem vorgeschriebenen Rhythmus betätigt wird.

## Ansprüche

1. Autoradio mit Speichern für die Werte der Einstellvariablen, mit den Speichern vorgeschalteten Schreib-/Lesestufen und mit einem die Speicher verwaltenden Mikroprozessor,
dadurch gekennzeichnet,
daß die Schreib-/Lesestufen (14) über einen steuerbaren Umschalter (9) jeweils mit einem von zwei oder mehreren getrennten Speichern (7, 8) verbindbar sind,
daß im Umschalter (9) jeder Stellung ein Steuereingang zugeordnet ist, der jeweils mit einem Ausgang einer Vergleichsstufe (10) verbunden ist,
und daß derjenige Ausgang der Vergleichsstufe (10) ein Steuersignal abgibt, dessen zugeordneter Code in die Eingabeeinheit (11) eingegeben ist.

2. Autoradio nach Anspruch 1,
dadurch gekennzeichnet,
daß die Eingabeeinheit eine Aufnahme für eine mit mehreren getrennten, jeweils in maximal acht hintereinandergeschaltete Teilwiderständen aufgeteilte Widerstandsbahn bedruckten Schlüsselkarte aufweist
und daß in der Aufnahme A/D-Wandler (17, 18) für die Umwandlung der Widerstandswerte in Codedaten vorgesehen sind.

3. Autoradio nach einem der vorhergehenden Ansprüche,
dadurch gekennzeichnet,
daß den Ausgängen der Vergleichsstufe (10) eine Oderschaltung (19) nachgeschaltet ist, die parallel zu dem Umschalter (9) liegt und deren Ausgang mit dem Eingang einer an sich bekannten Entriegelungsschaltung für eine Codeschutzschaltung (20) eines Autoradios verbunden ist.

FIG.1

FIG.2

EP 0 414 121 A2